# EUROPEAN PATENT APPLICATION

(11) **EP 4 694 036 A1**
(43) Date of publication of application: **11.02.2026**
(21) Application number: 25194122.5
(22) Date of filing: 05.08.2025
(51) Int. Cl.: H04L 9/40

(54) **OFFLINE CERTIFICATE AUTHORITY RENEWAL FOR MEDICAL DEVICES**

(30) Priority: 07.08.2024 US 202463680471 P; 28.07.2025 US 202519282285
(71) Applicant: Medtronic MiniMed, Inc., Northridge, CA 91325-1219 (US)
(72) Inventor: BERIAN, Jesus, Northridge, 91325 (US); ROSALES, Miguel F., Northridge, 91325 (US); SERRANO, Eduardo Javier, Northridge, 91325 (US); NGUYEN, Vincent K., Northridge, 91325 (US)
(74) Representative: Zimmermann & Partner Patentanwälte mbB

(57) **Abstract**

In a system where secure communication relies on device certificates issued by an authority having its own certificate, a first device can transmit an update message to a second device based on determining that the most recent certificate available to the first device is newer than the most recent certificate available to the second device. In various examples, the update message includes the newer certificate and is digitally signed by a mutually trusted authority. The update message can be transmitted during a time when one or both devices are unable to communicate with the mutually trusted authority. In this way, the second device can obtain the newer certificate through an offline update process and use the newer certificate to validate a device certificate of the first device, e.g., as a prerequisite for establishing a communication channel to the first device.

## Description

### CROSS-REFERENCE TO RELATED APPLICATION

This application claims the benefit of and priority to U.S. Provisional Application No. 63/680,471, filed August 7, 2024, entitled "OFFLINE CERTIFICATE AUTHORITY RENEWAL FOR MEDICAL DEVICES," which is assigned to the assignee hereof and is hereby incorporated by reference in its entirety for all purposes.

### TECHNICAL FIELD

The present disclosure relates generally to secured electronic communication, in particular to communications between electronic devices that are issued device certificates by a certificate authority. Aspects of the disclosure are directed to communication between medical devices through a public key infrastructure.

### BACKGROUND

Electronic communications are often encrypted for security. Many cryptographic algorithms rely on shared secrets (e.g., encryption keys and decryption keys). Encryption may involve symmetric key cryptography or asymmetric key cryptography. Symmetric key cryptography uses the same key to both encrypt and decrypt data. Asymmetric key cryptography (also known as public key cryptography) uses a combination of public and private keys to encrypt and decrypt data. For example, a first electronic device may use its own private key to encrypt a message for transmission to a second electronic device, and the second electronic device may decrypt the message using the first electronic device's public key. The electronic devices can share their public keys with each other while keeping their own private keys secret.

Public key cryptography is frequently employed in medical settings due to the sensitive nature of the data being communicated (e.g., personal or health information). Medical devices may rely on security mechanisms provided by a public key infrastructure (PKI). A PKI generally includes one or more computer systems responsible for implementing policies and procedures related to digital certificates and public-key encryption. Digital certificates can be used for device authentication. For example, a digital certificate issued to an electronic device may include the device's public key together with information identifying the device and a digital signature of an entity that issued the digital certificate. The entity that issues a digital certificate may be authorized to do so on a time-limited basis, in which case the issuer may need to periodically renew its own credentials in order to continue issuing certificates.

### SUMMARY

The present disclosure relates generally to secured electronic communication, in particular to communications between electronic devices that are issued device certificates by an authority. More specifically, techniques are disclosed herein for enabling electronic devices to update their certificates through inter-device communication without obtaining the updated certificates directly from a trusted authority. For example, an electronic device may obtain an updated certificate based on an update message received from another electronic device. The updated certificate allows the message recipient to validate a device certificate of the sender device in order to establish trust between both devices. Such inter-device communication may occur during a time when one or both devices are offline (e.g., in the absence of a network connection to the authority) and in connection with setting up a communication channel for exchange of data between the devices.

A system may include one or more processors in an electronic device and one or more processor-readable storage media storing instructions which, when executed by the one or more processors, cause performance of receiving a first certificate from a different electronic device, where the first certificate represents an identity of an authority that issued a device certificate of the different electronic device; and determining that the first certificate is older than a second certificate representing an identity of an authority that issued a device certificate of the electronic device. The instructions further cause transmitting of an update message to the different electronic device in response to the determination that the first certificate is older, where the update message is digitally signed by a mutually trusted authority and includes the second certificate. The instructions further cause establishing a communication channel with the different electronic device based upon mutual authentication with the different electronic device using the second certificate.

A processor-implemented method may include receiving, by a first electronic device, a first CA certificate from a second electronic device, where the first CA certificate represents an identity of a CA that issued a device certificate of the second electronic device; and determining, by one or more processors of the first electronic device, that the first CA certificate is older than a second CA certificate representing an identity of a CA that issued a device certificate of the first electronic device. The method may further include transmitting, by the first electronic device, an update message to the second electronic device in response to the determination that the first CA certificate is older, where the update message is digitally signed by a mutually trusted authority and includes the second CA certificate. The method may further include establishing, by the first electronic device, a secure communication channel for encrypted communication with the second electronic device based upon mutual authentication with the second electronic device using the second CA certificate.

One or more non-transitory processor-readable storage media may store instructions which, when executed by one or more processors of a first electronic device, cause performance of receiving, by the first electronic device, a first CA certificate from a second electronic device, where the first CA certificate represents an identity of a CA that issued a device certificate of the second electronic device; and determining, by one or more processors of the first electronic device, that the first CA certificate is older than a second CA certificate representing an identity of a CA that issued a device certificate of the first electronic device. The instructions further cause transmitting, by the first electronic device, an update message to the second electronic device in response to the determination that the first CA certificate is older, where the update message is digitally signed by a mutually trusted authority and includes the second CA certificate. The instructions further cause establishing, by the first electronic device, a secure communication channel for encrypted communication with the second electronic device. Establishing the secure communication may involve validating the device certificate of the first electronic device using the second CA certificate to mutually authenticate the first electronic device with the second electronic device.

Further disclosed herein is that in a system where secure communication relies on device certificates issued by an authority having its own certificate, a first device can transmit an update message to a second device based on determining that the most recent certificate available to the first device is newer than the most recent certificate available to the second device. In various examples, the update message includes the newer certificate and is digitally signed by a mutually trusted authority. The update message can be transmitted during a time when one or both devices are unable to communicate with the mutually trusted authority. In this way, the second device can obtain the newer certificate through an offline update process and use the newer certificate to validate a device certificate of the first device, e.g., as a prerequisite for establishing a communication channel to the first device.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

Illustrative embodiments are described in detail below with reference to the following figures.
FIG. 1 illustrates an example of a system according to certain embodiments.
FIG. 2 illustrates an example of authority information according to certain embodiments.
FIG. 3 illustrates an example scenario in which electronic devices are using different certificate authority certificates.
FIG. 4 illustrates a process for updating a certificate authority certificate in the scenario of FIG. 3, according to certain embodiments.
FIG. 5 is a flow diagram of a method for updating a certificate authority certificate, according to certain embodiments.
FIG. 6 is a flow diagram of a method for updating a certificate authority certificate, according to certain embodiments.
FIG. 7 illustrates an example therapy delivery system in accordance with certain aspects of the present disclosure.
FIG. 8 illustrates an example of a delivery device, which may implement some of the examples disclosed herein.
FIG. 9 is a simplified block diagram of an example electronic device that may implement some of the examples disclosed herein.

### DETAILED DESCRIPTION

The present disclosure relates generally to secured electronic communication, in particular to communications between electronic devices that are issued device certificates by a certificate authority (CA). More specifically, techniques are disclosed herein for enabling electronic devices to update their CA certificates through inter-device communication without obtaining the updated CA certificates directly from a CA. For example, an electronic device may obtain an updated CA certificate based on an update message received from another electronic device. The updated CA certificate allows the message recipient to validate a device certificate of the sender device and authenticate the sender device. Such inter-device communication may occur during a time when one or both devices are offline (e.g., in the absence of a network connection to the CA or some other trusted authority that is a source of CA certificates). In some embodiments, update messages are communicated in connection with setting up a secure communication channel for exchange of encrypted messages between devices. In a medical system, the content of the encrypted messages may include medical data, electronic commands (e.g., an instruction or signal to deliver a therapeutic dose of medication), or other information relevant to a person's medical condition.

For purposes of illustration and explanation, various examples described in this disclosure are related to medical devices, including insulin or fluid delivery devices. However, the techniques disclosed herein can be applied to other environments in which secured communications are conducted between electronic devices. Illustrative examples of systems, devices, and methods embodying aspects of these techniques are described with reference to the accompanying drawings. The embodiments can be combined in different ways and modified/adapted as appropriate depending on application.

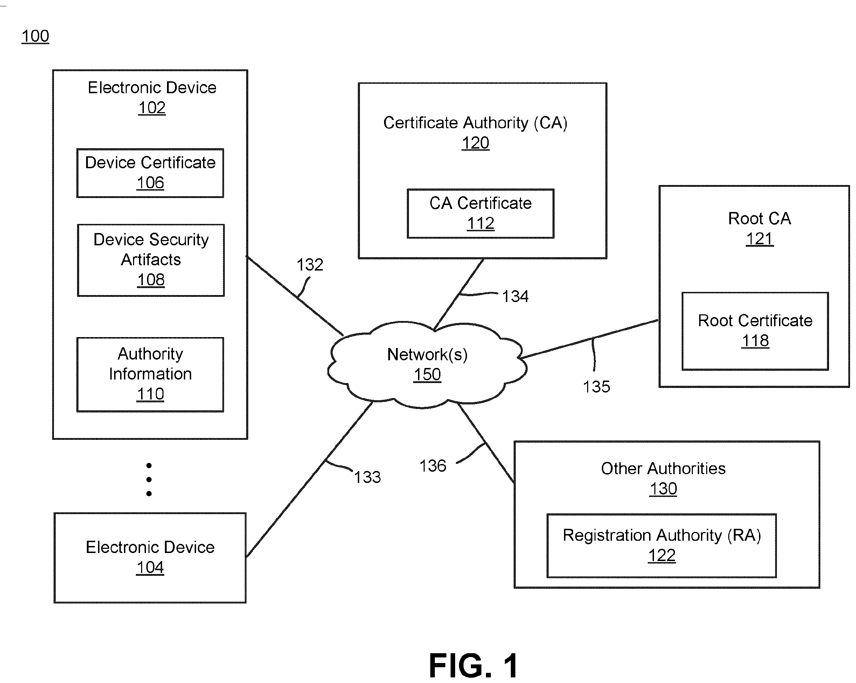

FIG. 1 shows an example of a system 100 according to certain embodiments. The system 100 includes components that implement a public key infrastructure (PKI). A PKI generally includes one or more computer systems responsible for implementing policies and procedures related to digital certificates and public-key encryption. Digital certificates can be used for device authentication. For example, a digital certificate issued to an electronic device may include the device's public key together with information identifying the device and a digital signature of an entity that issued the digital certificate. The entity that issues a digital certificate may be authorized to do so on a time-limited basis, in which case the issuer may need to periodically renew its own credentials (e.g., a new CA certificate) in order to continue issuing device certificates.

In the example of FIG. 1, the components responsible for providing the PKI include various trusted authorities. For example, the system 100 may include a CA 120 and a root CA 121. The system 100 may also include other authorities 130, such as a registration authority (RA) 122. The authorities 120-122 are trusted entities whose responsibilities may include, among other things, issuing device certificates for electronic devices (e.g., a first electronic device 102 and a second electronic device 104) that participate in secured communications within the system 100. The authorities 120-122 can be implemented in hardware, software, or a combination of hardware and software. As such, the authorities 120-122 may correspond to logical entities that physically reside in a centralized location (e.g., a server computer) or are distributed across different computer systems. FIG. 1 is merely an example of one possible arrangement of authorities. Other configurations may feature additional or fewer authorities, and functionality described with respect to one type of authority may be combined with that of another authority.

The authorities 120-122 may be arranged in a trust hierarchy, with the root CA 121 being the root of trust. Specifically, the root CA 121 may have the highest level of trust in the PKI and may be issued (or self-generate) a root certificate 118 that has a comparatively long validity period. In some implementations, the root certificate 118 may have no expiration date. The root CA 121 may own a private key that is used to instantiate a new certificate authority. Thus, the root CA 121 may be solely responsible for issuing the CA certificate 112 of the CA 120 and updating the CA certificate 112 whenever the CA certificate 112 needs to be renewed.

CA 120 may reside at the next level of the trust hierarchy, below the root CA 121. The CA 120 may be responsible for issuing certificates to electronic devices as well as certificates for authorities residing at lower levels of the trust hierarchy (e.g., the RA 122). In some instances, the CA 120 may issue a certificate in response to a signature request. For example, an electronic device may send the CA 120 a self-generated certificate, and the CA 120 may issue the electronic device a device certificate corresponding to a signed version of the self-generated certificate. The device certificate would include a digital signature proving the authenticity of the device certificate, and therefore the identity of the bearer of the device certificate. In some embodiments, device certificates may be formatted in accordance with the X.509 certificate standard. Device certificates can be issued as part of enrolling electronic devices into the PKI of the system 100. Electronic devices may also periodically request new device certificates (e.g., when an existing device certificate has expired or is about to expire). The CA 120 may verify the identity of a device requesting a device certificate (e.g., by checking the contents of the self-generated certificate) as a condition for issuing the device certificate. The CA 120 may also revoke device certificates in some circumstances (e.g., in response to a security breach that exposed an electronic device's private key).

The digital signature for a device certificate can be generated in various ways, such as through computing a hash of the self-generated certificate and encrypting the hash using a private key of the CA 120. The hash can be computed using a standard hash algorithm, such as Secure Hash Algorithm 2 with 256 bits (SHA256). The device certificate can be validated by decrypting the hash using a public key of the CA 120, computing a hash of the device certificate as received by the entity performing the validation, and comparing the decrypted hash to the newly computed hash. The public key of the CA 120 may be included in the CA certificate 112. The CA 120 may communicate the CA certificate 112 to any entity that needs to validate device certificates, e.g., by sending the CA certificate to each electronic device enrolled in the PKI of in the system 100. In this way, the electronic devices are able to authenticate each other by verifying that their device certificates are signed by the CA 120, which is a mutually trusted authority.

RA 122 may be configured to sign renewal messages (also referred to herein as update messages). At least some of the certificates generated and used in the system 100 are subject to periodic renewal (e.g., all certificates except the root certificate 118). Certificates to be renewed may include the CA certificate 112, a certificate of the RA 122 (not shown in FIG. 1), and device certificates (e.g., the device certificate 106). For example, the root CA 121 may issue new CA certificates to the CA 120, with the RA 122 being responsible for distributing the new CA certificates. Similarly, the CA 120 may issue new device certificates, and the RA 122 may be responsible for distributing the new device certificates to electronic devices. The CA 120 may also issue new RA certificates for self-distribution by the RA 122. When an entity is issued a new certificate, the new certificate may include an updated public key that is paired with a corresponding updated private key. For example, an electronic device requesting a new device certificate may generate a new public-private key pair and include the public key in a signature request to the CA 120.

CA certificates, device certificates, and other types of certificates used in the system 100 may be distributed as update messages. Different entities may act as distributors for different types of certificates. In some embodiments, update messages are formatted as Public Key Cryptography Standards (PKCS) messages. For example, update messages may be PKCS#7 (RFC 2315) messages. The distributor of a certificate (e.g., the signer of a PKCS#7 message with a payload containing the certificate) is preferably different from the issuer of the certificate since this enhances security. For instance, a malicious user seeking to install an illegitimate device certificate on an electronic device may need to steal the private keys of both the CA 120 and the RA 122 (the issuer and the distributor, respectively, of device certificates in the above-described example).

The components in the system 100 are communicatively intercoupled through one or more networks 150. The network(s) 150 may include wired and/or wireless networks that are accessed through a plurality of communications links, such as communication links 132-136. The communications links 132-136 may each be a wired connection and/or a wireless connection. Although not shown in FIG. 1, the electronic devices 102 and 104 may also be communicatively coupled to each other through communications links. In embodiments where two devices are located in the same device housing, the communication links may include, for example, wires, cables, and/or communication buses on a printed circuit board, among other things. In embodiments where two devices are separated from each other in different device housings, the communication links may be wired and/or wireless connections.

Wired connections may include, without limitation, an Ethernet connection, a Universal Serial Bus (USB) connection, and/or another type of physical connection. Wireless connections may include, without limitation, a cellular connection, a Wi-Fi connection, a Bluetooth^{®} connection, a mesh network connection, and/or another type of connection using a wireless communication protocol. Some communication links may use direct connections, such as Bluetooth^{®} connections, and/or may use connections that route through one or more networks or network devices (not shown), such as an Ethernet network, a Wi-Fi network, a cellular network, a satellite network, an intranet, an extranet, the Internet, and/or the Internet backbone, among other types of networks. Various combinations of wired and/or wireless connections may be used for the above-described communication links.

As an illustrative example, the electronic devices 102, 104 may establish a secure communication channel for communicating with each other using a Bluetooth^{®} or near field communication (NFC) protocol. To establish the secure communication channel, the electronic devices 102, 104 may engage in a pairing or bonding procedure in which the electronic devices exchange certain information, including information about one or more of the authorities (e.g., the CA 120), and then validate the exchanged information. In some embodiments, the initial setup of the secure communication channel may involve exchanging device certificates and/or CA certificates. For example, the electronic device 102 may include a device certificate 106 issued by the CA 120. Further, the electronic device 102 may include a CA certificate (not shown in FIG. 1) representing the identity of an authority (i.e., the CA 120) that issued the device certificate 106.

The device certificate 106 may be stored locally in a memory system of the electronic device 102 and can be a digital certificate that was generated by the electronic device 102 and then signed by the CA 120 before being returned to the electronic device 102. The device certificate 106 may include information identifying the electronic device 102 (e.g., a device name, a hardware address, a network address, and/or other metadata) and a public key associated with the electronic device 102. The public key may belong to a set of device security artifacts 108 maintained by the electronic device 102. For example, the device security artifacts 108 may further include a private key associated with the electronic device 102. The electronic device 102 may use the private key to encrypt certain types of messages for transmission to the electronic device 104 or some other recipient, and the messages may be decrypted using the public key.

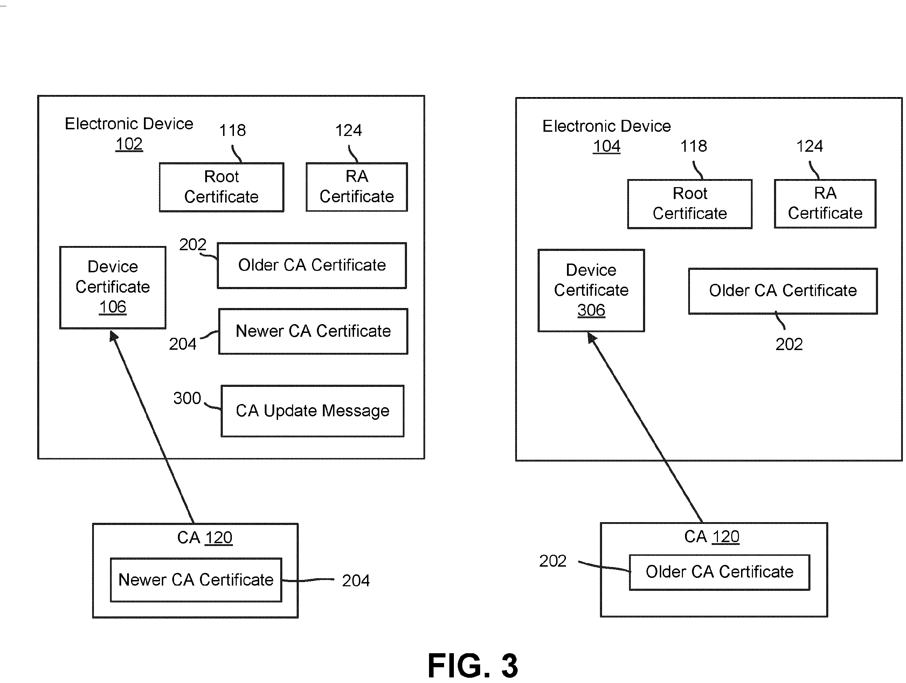

Like the electronic device 102, the electronic device 104 may store its own device certificate and device security artifacts. The device certificate of the electronic device 104 is typically issued by the CA 120 at a different time than the device certificate 106 of the electronic device 102. This is because each electronic device 102, 104 may be configured to independently request issuance of its corresponding device certificate. Further, electronic devices may be added to or removed (enrolled/unenrolled) from the system 100 over time. For example, new electronic devices joining the system may be registered with the RA 122 and issued device certificates at the time of registration. The CA 120 may operate using a CA certificate 112 that has an expiration period (e.g., several weeks, months, or years). The CA 120 may use the CA certificate 112 to digitally sign a device certificate, thereby attesting to the authenticity of the device certificate. As discussed below in connection with FIG. 3, a problem may arise when electronic devices whose device certificates were issued by different CAs or different versions of the same CA are attempting to communicate with each other. To address this problem, the electronic devices may store information about the CA 120 and other authorities. For example, the electronic device 102 may store authority information 110 that enables the electronic device 102 to initiate an offline update of the CA certificate for an electronic device having an older CA certificate (e.g., the electronic device 104).

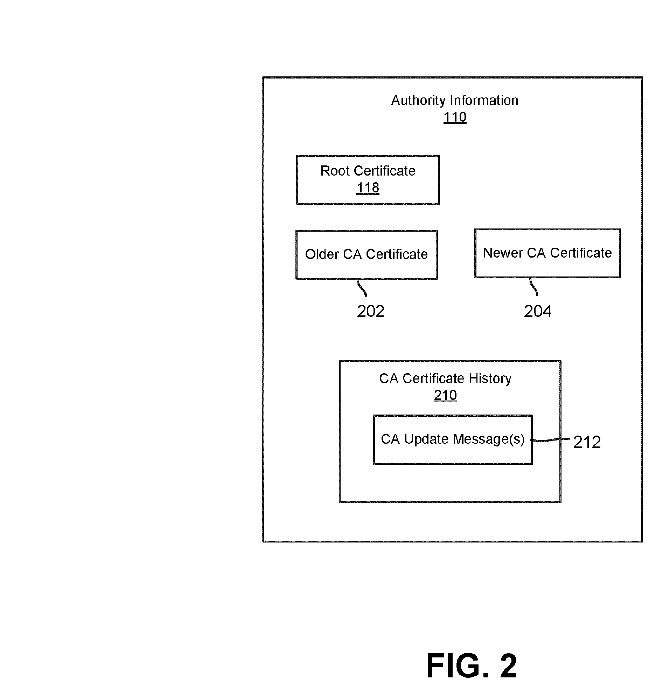

**FIG.** 2 illustrates an example of authority information according to certain embodiments. Although described with respect to the authority information 110 maintained by the electronic device 102, other electronic devices in the system 100 can be configured to maintain similar authority information. As shown in FIG. 2, the authority information 110 may include the root certificate 118, one or more CA certificates (e.g., an older CA certificate 202 and a newer CA certificate 204), and CA certificate history 210. In some embodiments, each electronic device is configured to retain a certain number of CA certificates and corresponding CA certificate history. For example, both electronic devices 102, 104 may be configured to store the most recent CA certificate received from the CA 120 (e.g., the newer CA certificate 204) and one or more older CA certificates (e.g., the older CA certificate 202). In one embodiment, the electronic devices may store the two most recent CA certificates. In this example, the older CA certificate 202 may correspond to an earlier version of the CA certificate 112 issued to the CA 120, and the newer CA certificate 204 may correspond to a later version of the CA certificate 112. Thus, the CA certificates 202, 204 may be associated with different versions of the same CA (e.g., the CA 120 before and after renewing its CA certificate with the root CA 121). The authenticity of both CA certificates 202, 204 can be verified against the root certificate 118 (e.g., using the public key of the root CA 121).

CA certificate history 210 includes one or more CA update messages 212, each of which may contain one or more timestamps. Timestamp information may be contained in the body of a CA certificate and/or in a different portion (e.g., a header field) of a CA update message. For example, the CA certificate in a CA update message may list a start time when the CA certificate starts to be valid, an expiration time when the CA certificate is no longer valid, and a time when the CA certificate was issued (not necessarily the same as the start time). Additionally, the CA update message may be tagged with a date the CA update message was received (e.g., by the electronic device 102). The timestamp information of different CA update messages (or different CA certificates) can be compared to determine the ages of the CA certificates that an electronic device has access to. For example, the most recent CA certificate obtained by an electronic device (e.g., CA certificate 204) may correspond to a CA certificate having a later expiration date relative to other CA certificates in the authority information 110.

CA update messages (or update messages in general) may have a specific format. For example, the CA update message(s) 212 may include a PKCS#7 message received by the electronic device 102 in connection with transitioning from the older CA certificate 202 to the newer CA certificate 204. In that case, the PKCS#7 message may include the newer CA certificate 204 in the message payload. The PKCS#7 message may have been sent during a time when the first electronic device 102 had a network connection (e.g., Internet access) to the sender. In this case, the sender could be the issuer of the newer CA certificate 204 (e.g., the root CA 121) or the distributor of the newer CA certificate 204 (e.g., the RA 122). Alternatively, the sender could be the CA 120 using the older CA certificate 202. More generally, the sender of the PKCS#7 message can be an authority that is trusted by the first electronic device 102. Thus, the first electronic device 102 may have obtained the newer CA certificate 204 through an online CA renewal procedure. In addition to obtaining the newer CA certificate 204, the first electronic device 102 may receive a new device certificate (e.g., a new version of the device certificate 106 signed using an updated CA private key that is paired with the public key in the newer CA certificate 204).

As discussed below, the CA update message(s) 212 can be used to update the CA certificate of other devices. This is because each CA update message (e.g., the message itself and the CA certificate in the payload) is signed by one or more authorities that are mutually trusted by all electronic devices enrolled in the PKI (e.g., signed by an issuer and a distributor, as described above). Therefore, the CA update message may be valid for any electronic device even if the CA update message is not sent directly from a trusted authority. The CA update message(s) 212 do not need to be encrypted since no confidential data is exchanged when communicating a CA update message between electronic devices.

**FIG. 3** illustrates an example scenario in which electronic devices are using different CA certificates. In the example shown, the electronic devices 102, 104 each have the root certificate 118 and an RA certificate 124. However, the electronic device 104 only has the older CA certificate 202, while the electronic device 102 has access to both the older CA certificate 202 and the newer CA certificate 204. In this example, the CA 120 issued the device certificate 106 to the electronic device 102 after receiving the newer CA certificate 204 (e.g., from the root CA 121 or the RA 122). In contrast, the electronic device 104 has a device certificate 306 that was issued by the CA 120 during a time when the CA 120 was still using the older CA certificate 202.

The scenario depicted in FIG. 3 may arise due to changes in network connectivity of the electronic devices. For example, the electronic device 104 may have been powered off or kept offline without Internet access for an extended period. Consequently, the electronic device 104 may have been unable to perform an online CA certificate update. During the time that the electronic device 104 was offline, the electronic device 102 may have remained online and thus able to receive the newer CA certificate 204 through an online update. Subsequently, when the electronic devices 102, 104 are attempting to establish a secure communication channel with each other, only one of the electronic devices is able to verify the identity of the other electronic device.

Here, the electronic device 102 has the ability to check the authenticity of the device certificate 306 based on the older CA certificate 202. By contrast, the electronic device 104 cannot check the authenticity of the device certificate 106 based on the older CA certificate 202 since the device certificate 106 was issued by a "different" CA. In order to determine that the device certificate 106 is authentic, the electronic device 104 would need access to the newer CA certificate 204. This is usually not a problem if the electronic device 104 is online at the time. If so, the electronic device 104 could simply initiate an online update to obtain the newer CA certificate 204 before reconnecting to the electronic device 102. However, if the electronic device 104 remains offline, it will not be able to engage in secured communications with the electronic device 102.

The scenario depicted in FIG. 3 is especially challenging when one or both of the electronic devices 102, 104 is a medical device. In a medical setting, electronic devices are expected to perform reliably, and failure to exchange data in a timely manner may result in adverse effects on a patient's health. For example, in some embodiments, the system 100 may include a glucose sensor, an insulin infusion pump, and a glucose monitor device that obtains glucose measurements from the glucose sensor and processes the measurements to determine dosage parameters for insulin doses delivered by the insulin infusion pump. The electronic device 104 may correspond to the insulin infusion pump or the glucose sensor, and the electronic device 102 may correspond to the glucose monitor device. If the glucose monitor is unable to communicate with the glucose sensor or the insulin infusion pump, this could lead to missed doses, inappropriately timed doses, incorrect dosage amounts, and/or other inappropriate medical interventions that worsen the health of a diabetes patient.

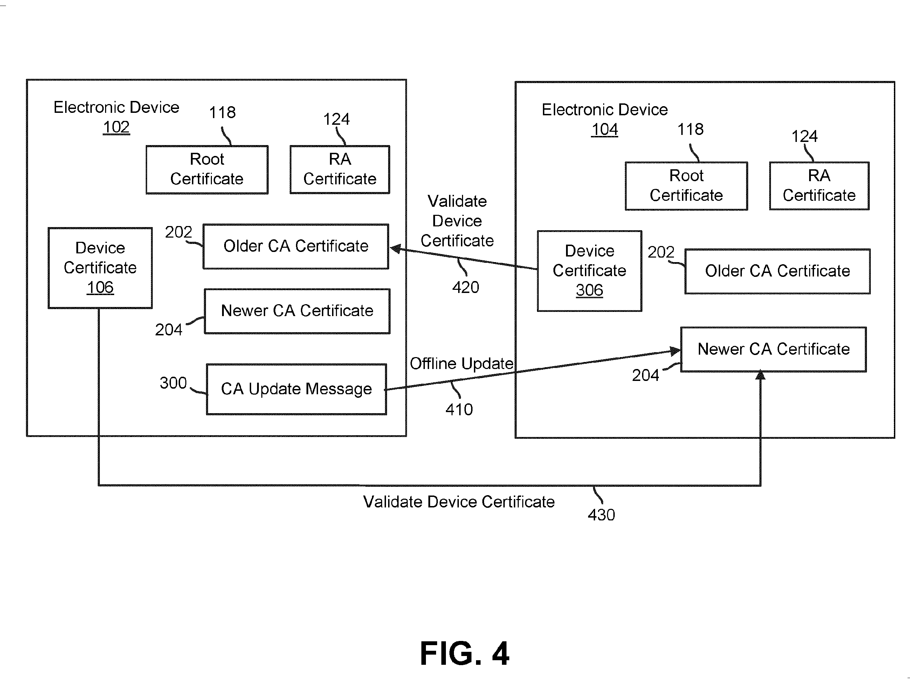

**FIG.** 4 illustrates a process for updating a CA certificate in the scenario of FIG. 3, according to certain embodiments. At 410, the electronic device 102 initiates an offline update of the CA certificate for the electronic device 104 by communicating the CA update message 300 to the electronic device 104. As discussed above in connection with FIG. 2, CA update messages may be valid for all electronic devices enrolled in the PKI due to being digitally signed by one or more authorities that are mutually trusted. Accordingly, sending the CA update message 300 to the electronic device 104 may prompt the electronic device 104 to switch to the newer CA certificate 204. The electronic device 104 may recognize the CA update message 300 as a valid request through verifying that the CA update message 300 is signed by a mutually trusted authority (e.g., using a public key of the RA 122 that was included in the RA certificate 124 or a public key of the CA 120 that was included in the older CA certificate 202). Processing of the CA update message 300 may further include extracting the newer CA certificate 204 from a payload section of the CA update message 300 and verifying that the newer CA certificate 204 is signed by a trusted authority (e.g., using a public key of the root CA 121 that was included in the root certificate 118). In this manner, the electronic device 104 can obtain the newer CA certificate 204 without directly communicating with any of the trusted authorities.

After extracting and verifying the newer CA certificate 204, the electronic device 104 may store the newer CA certificate 204 for use in verifying the authenticity of the device certificate 106 issued to the electronic device 102. The electronic device 104 may also store the CA update message 300 as part of its CA certificate history 210 so that the authority information 110 is synchronized across both electronic devices. Assuming the electronic device 104 is still offline at this time, the device certificate 306 has yet to be updated and remains signed by the older version of the CA 120. However, as explained above, the electronic device 102 can verify the authenticity of the device certificate 306 based on the older CA certificate 202. Thus, the electronic devices 102, 104 can authenticate each other even though their device certificates are signed by different versions of the CA 120. In some embodiments, the electronic device 102 may compare its own copy of the older CA certificate 202 against the most recent CA certificate of the electronic device 104 to confirm that the certificates match. Use of the older CA certificate 202 to verify the authenticity of the device certificate 306 may be conditioned upon there being a successful match.

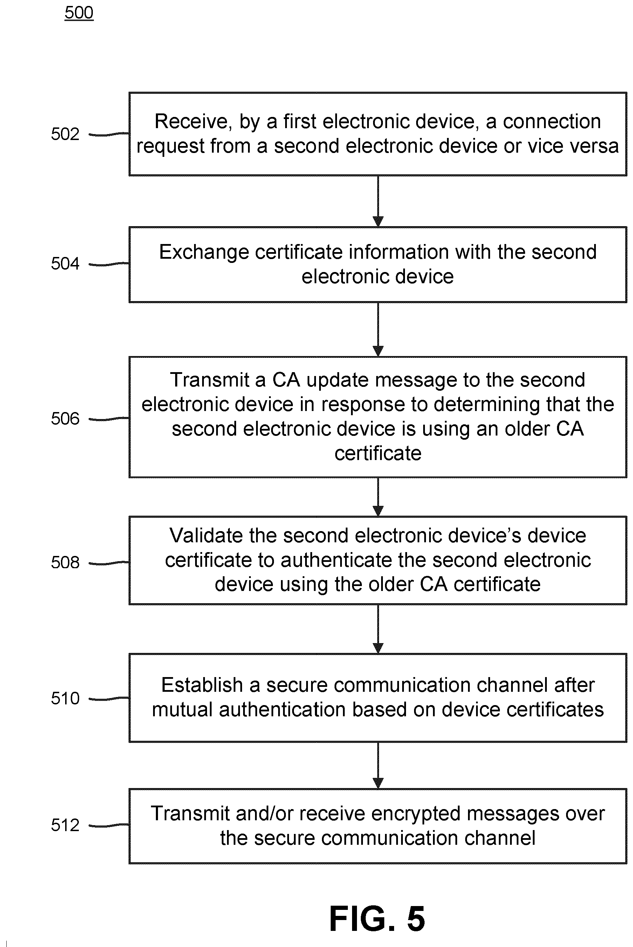

**FIG. 5** is a flow diagram of a method 500 for updating a CA certificate, according to certain embodiments. The method 500 may be performed by a first electronic device (e.g., the electronic device 102) having a newer CA certificate than a second electronic device (e.g., the electronic device 104). The functionality depicted in FIG. 5 may be implemented as a precursor to secured communications between the first electronic device and the second electronic device.

At block 502, the first electronic device may receive a connection request from the second electronic device. Alternatively, the first electronic device may send the connection request to the second electronic device. The connection request may be transmitted through a direct (e.g., peer-to-peer) connection between the electronic devices. In some instances, the connection between the electronic devices may be a wireless connection. For example, the functionality in block 502 may correspond to a Bluetooth^{®} pairing procedure.

One or both of the electronic devices may be offline at the time of the connection request in block 502. For example, the second electronic device may have no Internet access due to its Wi-Fi transceiver being turned off, but a Bluetooth^{®} transceiver of the second electronic device may still be active to allow the second electronic device to connect to the first electronic device. When an electronic device is offline, the electronic device may be unable to perform an online update of its CA certificate due to lack of a network connection to a mutually trusted authority responsible for communicating CA update messages.

At block 504, the first electronic device and the second electronic device may exchange certificate information. For example, each electronic device may send its most recent CA certificate to the other electronic device. Thus, the first electronic device may receive a first CA certificate corresponding to the most recent CA certificate obtained by the second electronic device. Likewise, the second electronic device may receive a second CA certificate corresponding to the most recent CA certificate obtained by the first electronic device. The certificate information exchanged in block 504 may optionally include device certificates (e.g., the device certificates 106 and 306 in FIG. 3). However, device certificates can be exchanged in a separate transaction (e.g., in conjunction with the mutual authentication discussed below).

As discussed earlier, a device certificate of an electronic device may be digitally signed by a CA that issued the device certificate. Thus, the first CA certificate may represent an identity of a CA that issued the device certificate of the second electronic device certificate. Similarly, the second CA certificate may represent an identity of a CA that issued the device certificate of the first electronic device.

At block 506, the first electronic device may transmit a CA update message to the second electronic device in response to determining that the second electronic device is using an older CA certificate. The determination in block 506 may involve comparing a timestamp of the first CA certificate to a timestamp of the second CA certificate to determine that the first CA certificate is older (e.g., expires sooner) than the second CA certificate. The CA update message may be signed by a mutually trusted authority and includes the second CA certificate. In some instances, the signer of the CA update message may correspond to an older version of a CA (e.g., CA 120) that issued device certificates to both electronic devices. Since the CA update message is signed by the mutually trusted authority, the second electronic device can determine that the CA update message originated from the mutually trusted authority. As such, the second electronic device may process the CA update message to obtain the second CA certificate. It should be noted that although the second electronic device may have already received a copy of the second CA certificate as part of the certificate information exchange in block 504, the earlier copy may be untrusted since it lacks the endorsement of the mutually trusted authority and does not match the most recent CA certificate of the second electronic device.

At block 508, the first electronic device may validate the device certificate of the second electronic device. The functionality in block 508 may be implemented as part of a mutual authentication procedure based on device certificates. To validate the device certificate of the second electronic device, the first electronic device may use a public key from the first (older) CA certificate to decrypt and verify the signature (e.g., a hash value) in the device certificate of the second electronic device. Similarly, the second electronic device may validate the device certificate of the first electronic device using a public key from the second (newer) CA certificate as provided in the update message that was transmitted in block 506.

At block 510, the first electronic device may establish a secure communication channel for encrypted communication with the second electronic device. The establishing of the secure communication channel may be conditioned upon successful completion of the mutual authentication procedure. In some embodiments, the secure communication channel may be used for exchanging messages that protected through symmetric key cryptography. For example, the secure communication channel may operate in accordance with a Transport Layer Security (TLS) protocol. The TLS protocol (e.g., TLS version 1.3) may provide that once authentication of one or both parties involved in secure communications is completed using public (asymmetric) key cryptography in a PKI, a symmetric key is shared between the parties for use in encrypting and decrypting messages. Thus, the first electronic device and the second electronic device can mutually agree to use the same symmetric key as part of establishing the secure communication channel (e.g., a channel for a TLS session).

At block 512, the first electronic device may transmit and/or receive encrypted messages over the secure communication channel (e.g., using a shared, symmetric key). In embodiments where one or both of the electronic devices are medical devices, the messages transmitted over the secure communication channel may include medical information, such as physiological data (e.g., glucose measurements), treatment data (e.g., dosage parameters, dose records, or therapy recommendations), patient activity (e.g., meal or exercise logs), and/or the like.

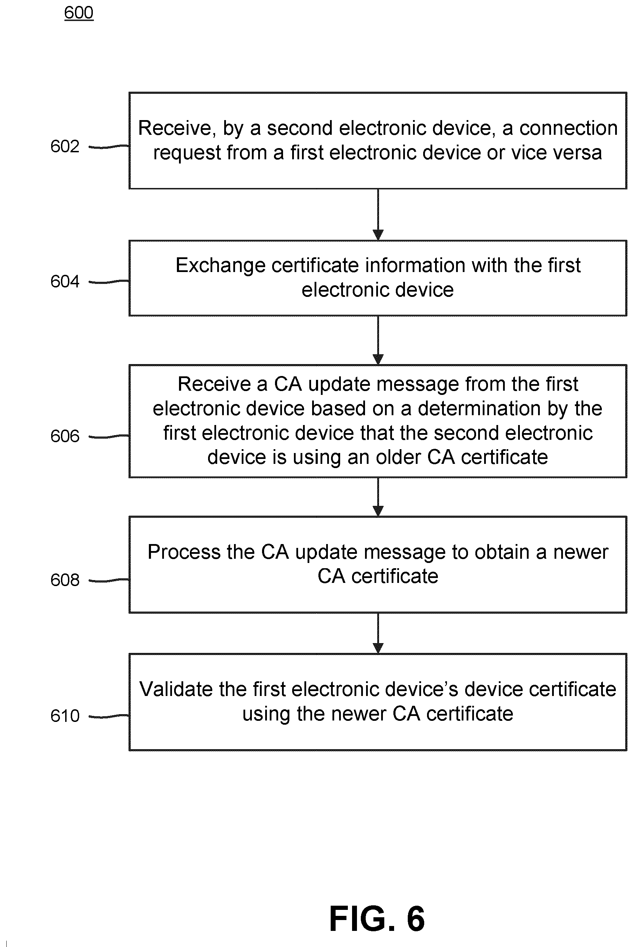

**FIG. 6** is a flow diagram of a method 600 for updating a CA certificate, according to certain embodiments. The method 600 may be performed to obtain a newer CA certificate for an electronic device. In particular, the method 600 may correspond to steps performed by the second electronic device in the method 500 of FIG. 5. As indicated in the discussion below, the method 600 may include functionality similar or analogous to functionality described with respect to the first electronic device in FIG. 5. For the sake of brevity, details of such functionality are not repeated. For example, blocks 602 and 604 of FIG. 6 may correspond to blocks 502 and 504.

At block 602, the second electronic device may receive a connection request from the first electronic device or send a connection request to the first electronic device.

At block 604, the second electronic device may exchange certificate information (e.g., most recent CA certificates) with the first electronic device.

At block 606, the second electronic device may receive a CA update message from the first electronic device. The receiving of the CA update message may be based on a determination, by the first electronic device, that the second electronic device is using an older CA certificate. For example, the CA update message received in block 606 could be a PKCS#7 message transmitted by the first electronic device in block 506 of FIG. 5.

At block 608, the second electronic device may process the CA update message to obtain a newer CA certificate (e.g., the second CA certificate in FIG. 5). The second electronic device may determine, based on a signature of the CA update message, that the CA update message is a valid request to switch to the newer CA certificate. As discussed above, the CA update message may be signed by a mutually trusted authority. Further, the newer CA certificate may be separately signed by a different authority (e.g., the root CA 121). The second electronic device may validate the newer CA certificate (e.g., using a public key from the root certificate 118) before switching to the newer CA certificate. The second electronic device may store the newer CA certificate along with the older CA certificate (e.g., as part of the authority information 110). Further, the second electronic device may store the CA update message. Typically, the second electronic device would store a corresponding CA update message for each CA certificate that the second electronic device is locally maintaining. In some embodiments, an existing CA certificate (e.g., the oldest CA certificate stored by the second electronic device) may be deleted or overwritten to make room for the newer CA certificate. As discussed earlier, one option would be to store only the two most recent CA certificates.

At block 610, the second electronic device may validate the device certificate of the first electronic device (e.g., as part of a mutual authentication procedure). The second electronic device may use the newer CA certificate from the CA update message in block 606 to validate the device certificate of the first electronic device. For example, the second electronic device may retrieve a public key from the newer CA certificate, where the public key belongs to the CA that issued the device certificate of the first electronic device. The second electronic device may use this public key to decrypt a digital signature (e.g., a hash value) in the device certificate of the first electronic device. After decrypting the signature, the second electronic device may compute a hash of the device certificate (e.g., using a hash algorithm specified in the device certificate) and compare the computed hash to the digital signature. If the hash values match, this indicates that the device certificate is authentic. After validating the device certificate of the first electronic device, the second electronic device may establish a secure communication channel for exchanging encrypted messages with the first electronic device (e.g., according to blocks 510 and 512 of FIG. 5).

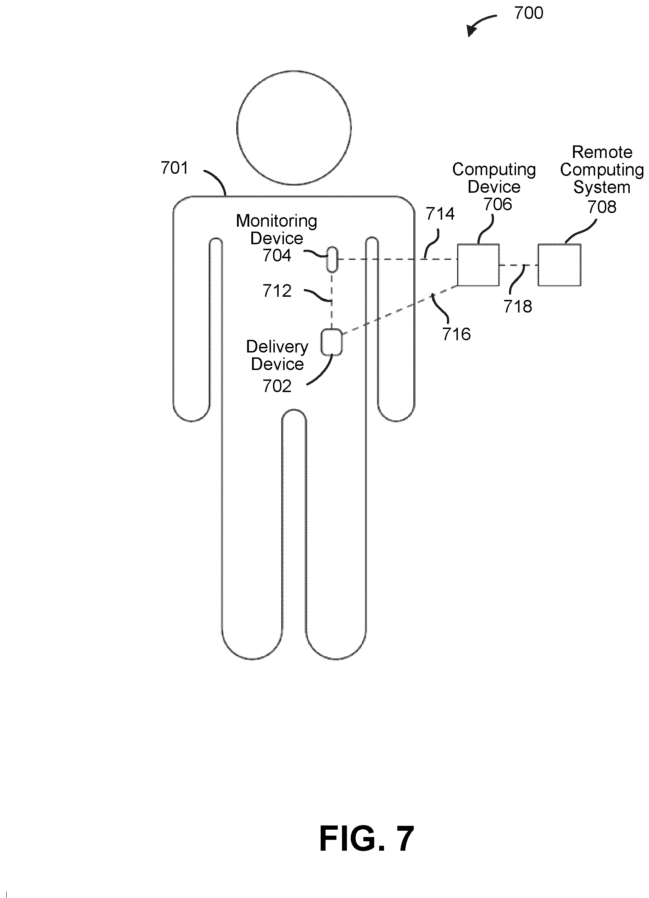

**FIG. 7** illustrates an example of a therapy delivery system 700 for a person 701. The system 700 may correspond to an embodiment of the system 100 in FIG. 1. In some embodiments, the system 700 may be an insulin delivery system, and the person 701 may be a diabetes patient. The system 700 may include a delivery device 702, a monitoring device 704, a computing device 706, and a remote or cloud computing system 708. The delivery device 702, the monitoring device 704, and the computing device 706 may be embodied in various ways, including being disposed in one or more device housings. For example, in some embodiments, all the devices 702-706 may be disposed in a single device housing. In some embodiments, each of the devices 702-706 may be disposed in a separate device housing. In some embodiments, two or more of the devices 702-706 may be disposed in the same device housing, and/or a single device 702, 704, or 706 may have two or more parts that are disposed in two or more housings. For example, the monitoring device 704 may include an on-body part and a display and control part communicating with the on-body part through wires or wirelessly. Similarly, the delivery device 702 may include an on-body site (e.g., including a cannula) and a part that includes a reservoir, a pump, and a control unit. These and other embodiments, and combinations thereof, are contemplated to be within the scope of the present disclosure.

System 700 may include a plurality of communications links, such as communication links 712-718. The communications links 712-718 may each be a wired connection and/or a wireless connection. In embodiments where two devices are located in the same device housing, the communication link may include, for example, wires, cables, and/or communication buses on a printed circuit board, among other things. In embodiments where two devices are separated from each other in different device housings, the communication links may be wired and/or wireless connections. Wired connections may include, without limitation, an Ethernet connection, a Universal Serial Bus (USB) connection, and/or another type of physical connection. Wireless connections may include, without limitation, a cellular connection, a Wi-Fi connection, a Bluetooth^{®} connection, a mesh network connection, and/or another type of connection using a wireless communication protocol. Some embodiments of the communication links 712-718 may use direct connections, such as Bluetooth^{®} connections, and/or may use connections that route through one or more networks or network devices (not shown), such as an Ethernet network, a Wi-Fi network, a cellular network, a satellite network, an intranet, an extranet, the Internet, and/or the Internet backbone, among other types of networks. Various combinations of wired and/or wireless connections may be used for the communication links 712-718.

Delivery device 702 is configured to deliver a therapeutic substance (e.g., insulin) to the person 701. The delivery device 702 may be secured to the person 701 (e.g., to the body or clothing of the person 701) or may be implanted on or in the body of the person 701. In some embodiments, the delivery device 702 may include a reservoir, an actuator, a delivery mechanism, and a cannula (not shown). The reservoir may be configured to store an amount of the therapeutic substance. In some embodiments, the reservoir may be refillable or replaceable. The actuator may be configured to drive the delivery mechanism. In some examples, the actuator may include a motor, such as an electric motor. The delivery mechanism may be configured to move the therapeutic substance from the reservoir through the cannula. In some examples, the delivery mechanism may include a pump and/or a plunger. The cannula may facilitate a fluidic connection between the reservoir and the body of the person 701. The cannula and/or a needle may facilitate delivery of the therapeutic substance to a tissue layer, vein, or body cavity of the person 701. During operation, the actuator, in response to a signal (e.g., a command signal), may drive the delivery mechanism, thereby causing the therapeutic substance to move from the reservoir, through the cannula, and into the body of the person 701.

The components of the delivery device 702 described above are merely provided as an example. The delivery device 702 may include other components, such as, without limitation, a power supply, a communication transceiver, one or more processors or other computing resources, memory devices, and/or user interfaces, among other things. Persons skilled in the art will recognize various implementations of the delivery device 702 and the components of such implementations. All such implementations and components are contemplated to be within the scope of the present disclosure.

Monitoring device 704 is configured to detect a physiological condition (e.g., a glucose concentration level) of the person 701 and may also be configured to detect other things. The monitoring device 704 may be secured to the body of the person 701 (e.g., to the skin of person 701 via an adhesive) and/or may be at least partially implanted into the body of the person 701. Depending on the particular location or configuration, the monitoring device 704 may be in contact with biological matter (e.g., interstitial fluid and/or blood) of the person 701. The monitoring device 704 may include one or more sensors (not shown), such as electrochemical sensors, electrical sensors, and/or optical sensors.

As persons skilled in the art will understand, an electrochemical sensor may be configured to respond to the interaction or binding of a biological marker to electrodes by generating an electrical signal based on, for example, a potential, conductance, current, and/or impedance of an electrical path through the electrodes. The electrodes may include a material selected to interact with a particular biomarker, such as glucose. The potential, current, conductance, and/or impedance may correlate with a concentration of the particular biomarker. In one example, the electrochemical sensor may include a glucose limiting membrane (GLM) that limits the amount of glucose and oxygen delivered to a glucose oxidase (GOx) layer of a working electrode of the sensor to ensure that the reactions are glucose limited. The GOx layer or another active enzyme layer on the working electrode of the sensor may break down glucose and oxygen into gluconic acid and hydrogen peroxide. The generated peroxide molecules may interact with the working electrode to break down hydrogen peroxide into two hydrogen ions, oxygen, and two electrons at the surface of the working electrode. When a voltage signal is supplied, the electrical charges may be forced to move, thereby generating a sensor current signal (Isig) that can be measured by sensor electronics. Other signals such as a counter electrode voltage (Vcntr), electrochemical impedance spectroscopy (EIS) at different frequencies, and the like, may also be measured. The signals measured using the sensor, including the Isig, Vcntr, and EIS, may be processed (e.g., filtered or transformed) to generate some other signals or parameters, such as filtered Isig signals, real and imaginary impedance at various frequencies, and the like. These signals and/or the processed parameters may be used in one or more sensor glucose (SG) models (e.g., machine learning models or mathematical models) to determine SG values that may be estimations of the blood glucose (BG) levels of the patient.

As persons skilled in the art would understand, an electrical sensor may be configured to respond to an electrical biosignal by generating an electrical signal based on an amplitude, frequency, and/or phase of the electrical biosignal. The electrical biosignal may include a change in electric current produced by the sum of an electrical potential difference across a tissue, such as the nervous system, of the person 701. In some embodiments, the electrical biosignal may include portions of a potential change produced by the heart of the person 701 over time (e.g., recorded as an electrocardiogram) that may be indicative of a glucose level of the person 701. An optical sensor may be configured to, for example, respond to the interaction or binding of a biological marker to a substrate by generating an electrical signal based on change in luminance of the substrate. In one example, the substrate may include a material selected to fluoresce in response to contact with a selected biomarker, such as glucose. The fluorescence may be proportional to a concentration of the selected biomarker.

In some embodiments, the monitoring device 704 may include other types of sensors that may be worn, carried, or coupled to the person 701 to measure activity of the person 701 that may influence the glucose levels or glycemic response of the person 701. As an example, the sensors may include an acceleration sensor configured to detect an acceleration of the person 701 or a portion of the person 701, such as the person's hands or feet, the position changes of which may be associated with an activity of person 701. For example, the acceleration or movement (or lack thereof) of the body portion of person 701 may be indicative of exercise, sleep, or food/beverage consumption activity of person 701, which may influence the glycemic response of person 701. In some embodiments, the sensors may measure heart rate and/or body temperature, which may indicate an amount of physical exertion experienced by person 701. In some embodiments, the sensors may include a Global Positioning System (GPS) receiver which may detect GPS signals to determine a location of person 701.

The sensors described above are merely provided as examples. Other sensors or types of sensors for monitoring physiological condition, activity, and/or location, among other things, will be recognized by persons skilled in the art and are contemplated to be within the scope of the present disclosure. For any sensor, a signal provided by the sensor shall be referred to as a "sensor signal." The term "sensed data" may mean and include the information represented by a sensor signal or by a pre-processed sensor signal. In some embodiments, sensed data may include glucose levels of person 701, acceleration of a part of person 701, heart rate of person 701, temperature of person 701, and/or geolocation (e.g., GPS location) of person 701, among other things. Monitoring device 704 may communicate sensed data to delivery device 702 via communication link 712 and/or to computing device 706 via communication link 714. Use of sensed data by delivery device 702 and/or by computing device 706 is described in more detail below.

The monitoring device 704 may include components and/or circuitry configured to pre-process sensor signals. Pre-processing may include, for example, amplification, filtering, attenuation, scaling, isolation, normalization, transformation, sampling, and/or analog-to-digital conversion, among other things. Persons skilled in the art will recognize various implementations for such pre-processing, including, without limitation, implementations using processors, controllers, integrated circuits, application specific integrated circuits (ASICs), hardware, firmware, programmable logic devices, and/or machine-executable instructions, among others. The types of pre-processing and their implementations are merely provided as examples. Other types of pre-processing and implementations are contemplated to be within the scope of the present disclosure. In some embodiments, the monitoring device 704 may not perform pre-processing.

Computing device 706 provides processing capabilities and may be implemented in various ways. In some embodiments, the computing device 706 may be a consumer device, such as a smartphone, a computerized wearable device (e.g., a smartwatch), a tablet computer, a laptop computer, or a desktop computer, among others, or may be a special purpose device (e.g., a portable control device) provided by, for example, the manufacturer of the delivery device 702. In some embodiments, the computing device 706 may be processing circuitry that is integrated with another device, such as the delivery device 702. In some embodiments, the computing device 706 may be secured to the person 701 (e.g., to the body or clothing of person 701), may be at least partially implanted into the body of person 701, and/or may be held by the person 701.

For each of the embodiments of the computing device 706, the computing device 706 may include various types of logic circuitry, including, but not limited to, microprocessors, controllers, digital signal processors (DSPs), application specific integrated circuits (ASICs), field-programmable gate arrays (FPGAs), central processing units (CPU), graphics processing units (GPU), programmable logic devices, memory (e.g., random access memory, volatile memory, nonvolatile memory, etc.), or other discrete or integrated logic circuitry, as well as combinations of such components. The term "processing circuitry" may generally refer to any of the foregoing logic circuitry, alone or in combination with other logic circuitry, or any other circuitry for performing computations.

One or more of the devices 702-706 may include a user interface (not shown) that presents information to the person 701 and/or receives information from the person 701. The user interface may include a graphical user interface (GUI), a display device, a keyboard, a touchscreen, a speaker, a microphone, a vibration motor, buttons, switches, and/or other types of user interfaces. Persons skilled in the art will recognize various types of user interfaces that may be used, and all such user interfaces are contemplated to be within the scope of the present disclosure. For example, where the computing device 706 is a consumer device such as a smart phone, tablet computer, laptop computer, or the like, the user interfaces would include a display device, a physical and/or virtual keyboard, and/or audio speakers provided by such consumer devices, among other things. In some embodiments, a user interface may notify the person 701 of sensed data (e.g., glucose level) and/or insulin delivery data (e.g., rates of historic, current, or future insulin delivery) and may present alerts to the person 701. In some embodiments, a user interface may receive inputs from the person 701, which may include, for example, a requested change in insulin delivery and/or a meal indication, among other things. The descriptions and embodiments above regarding user interfaces are merely provided as examples, and other types and other uses of user interfaces are contemplated to be within the scope of the present disclosure.

In one specific example, communications between the devices 702-706 and cooperation between the devices 702-706 may be used for insulin delivery. As discussed above, the devices 702-706 may communicate with each other via communication links 712-716. In some embodiments, the computing device 706 may control operation of the delivery device 702 and/or the monitoring device 704. For example, the computing device 706 may generate one or more signals (e.g., a command signal) that cause the delivery device 702 to deliver insulin to the person 701, for example, as a basal dosage and/or a bolus dosage. In some embodiments, the computing device 706 may receive data associated with insulin delivery (e.g., insulin delivery data) from the delivery device 702 and/or receive sensed data (e.g., glucose levels) from the monitoring device 704 and may perform computations based on the insulin delivery data, the sensed data, and/or other data to control the delivery device 702. Insulin delivery data may include, but is not limited to, a type of insulin being delivered, historical insulin delivery rates and/or amounts, current insulin delivery rate and/or amount, and/or user input affecting insulin delivery. As persons skilled in the art will understand, in a closed-loop operating mode, computing device 1406 may communicate dosage commands to the delivery device 702 based on a difference between a current glucose level in the body of the person 701 (e.g., received from the monitoring device 704) and a target glucose level (e.g., determined by the computing device 706). The dosage commands may indicate an amount of insulin to be delivered and/or a rate of insulin delivery and may regulate the current glucose level toward the target glucose level.

Remote or cloud computing system 708 may be a proprietary remote/cloud computing system or a commercial cloud computing system including one or more server computing devices. The remote/cloud computing system 708 may provide additional computing resources on-demand as needed when the computing resources of a client computing device (e.g., the computing device 706) are not sufficient. The computing device 706 and the remote/cloud computing system 708 may communicate with each other through a communication link 718, which may traverse one or more communication networks (not shown). The communication networks may include, without limitation, an Ethernet network, Wi-Fi network, a cellular network, a satellite network, an intranet, an extranet, the Internet, and/or the Internet backbone, among other types of networks. Persons skilled in the art will recognize implementations for the remote/cloud computing system 708 and how to interface with such systems through various types of networks. For example, the remote/cloud computing system 708 may include an array of processing circuitry and may execute machine-readable instructions. Such implementations, interfaces, and networks are contemplated to be within the scope of the present disclosure.

**In** some embodiments, therapy may be effected based on communicating a therapy determination toward a therapy delivery device. Using FIG. 7 as an example, a therapy determination (e.g., an insulin amount) may be made by the remote/cloud computing system 708 and communicated to the delivery device 702 via the computing device 706. Alternatively, the therapy determination may be made by the monitoring device 704 and communicated to the delivery device 702 directly or through an intermediary such as the computing device 706. In some cases, the computing device 706 may be the source of the therapy determination.

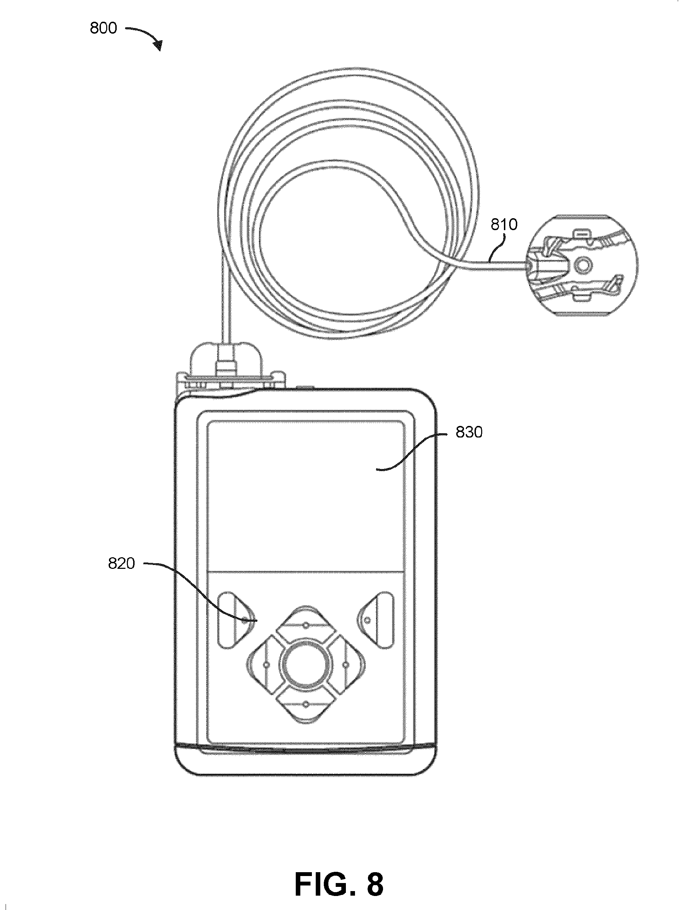

**FIG. 8** illustrates an example of a delivery device 800, which may implement a delivery device described herein (e.g., the delivery device 702). Delivery of a therapeutic agent may be performed based on internal communication between a central computing module (e.g., a microprocessor of the delivery device 800) and a delivery module (e.g., including a microcontroller, a motor, and a pump). For instance, insulin delivery may be caused by the central computing module communicating a delivery command in the form of an electrical signal that travels via a communication fabric to the delivery module. The central computing module may also be configured to communicate (e.g., via a transceiver) with a computing device (e.g., the computing device 706). In turn, the computing device may be communicatively coupled to a remote or cloud computing system (e.g., remote/cloud computing system 708). The delivery device 800 may communicate various event data toward the remote or cloud computing system, which may communicate delivery determinations toward the delivery device 800, in accordance with the techniques described herein.

The delivery device 800 may provide insulin (or some other therapeutic agent) through a small tube 810 configured for fluidic connection with a cannula inserted subcutaneously. **In** embodiments where delivery device 800 is an insulin delivery device, the delivery device 800 may be configured to deliver two types of dosages-a basal dosage, which can be delivered periodically (e.g., every five minutes) in tiny amounts throughout the day and night, and a bolus dosage to cover an increase in blood glucose from meals and/or to correct high blood glucose levels. Delivery device 800 may include a user interface having button elements 820 that can be manipulated to administer a dose, to change therapy settings, to change user preferences, to select display features, and the like. The delivery device 800 may also include a display device 830 that can be used to present various types of information or data to the user. In accordance with aspects of the present disclosure, a user of the delivery device 800 may use the button elements 820 to input certain event data (e.g., event type, event start time, event details, etc.), and the user inputs can be confirmed using the display device 830.

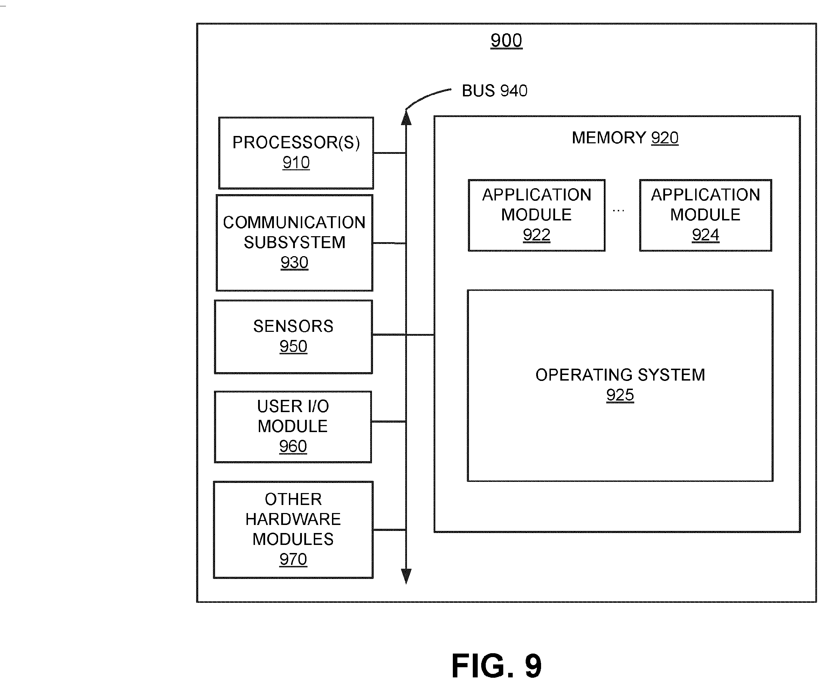

**FIG. 9** is a simplified block diagram of an example electronic device 900 that may implement some of the examples disclosed herein. For example, electronic device 900 may correspond to electronic device 102, electronic device 104, or any of the authorities described above in connection with FIG. 1 (e.g., CA 120, root CA 121, or RA 122). In the illustrated example, electronic device 900 may include one or more processor(s) 910 and memory 920. Processor(s) 910 may be configured to execute instructions stored in memory 920 for performing one or more of the methods described herein and other applications. Processor(s) 910 may include, for example, one or more central processing units, microprocessors, microcontrollers, special-purpose processors (e.g., digital signal processors), ASICs, DSPs, FPGAs, or other processors suitable for implementation within a portable electronic device. Processor(s) 910 may be communicatively coupled with a plurality of components within electronic device 900. To realize this communicative coupling, processor(s) 910 may communicate with the other illustrated components across a bus 940. Bus 940 may be any subsystem adapted to transfer data within electronic device 900. Bus 940 may include a plurality of computer buses and additional circuitry to transfer data.

Memory 920 may include one or more transitory and/or non-transitory storage devices, such as, for example, a static random access memory (SRAM), a dynamic random access memory (DRAM), a read-access memory (RAM), a read-only memory (ROM), a programmable read-only memory (PROM), an erasable programmable read-only memory (EPROM), a FLASH-EPROM, a secure digital (SD) card, and any other memory chip or cartridge. Such storage devices may be configured to implement any appropriate data stores, including without limitation, various file systems, data structures, computer-readable instructions, program modules, and the like. In some embodiments, memory 920 may be distributed into different hardware modules.

Memory 920 may include an operating system 925 loaded therein. Operating system 925 may be operable to initiate the execution of the instructions provided by application modules 922-924 and/or manage other hardware modules 970, as well as interface with a communication subsystem 930 which may include one or more wired and/or wireless transceivers. Operating system 925 may be adapted to perform other operations across the components of electronic device 900 including threading, virtualization, resource management, data storage control, and other similar functionality. In some embodiments, memory 920 may store a plurality of application modules 922 through 924, which may include any number of applications. Examples of the applications may include an insulin calculator, a blood glucose level monitor or predictor, a glucose level management application, and the like. Application modules 922-924 may include particular instructions to be executed by processor(s) 910. In some embodiments, certain applications or parts of application modules 922-924 may be executable by other hardware modules 970.

Communication subsystem 930 may include, for example, an infrared communication device, a wireless communication device and/or chipset (such as a Bluetooth^{®} device, an IEEE 802.11 device, a Wi-Fi device, a WiMax device, cellular communication devices, etc.), and/or similar communication interfaces. One or more antennas (not shown) may be used for wireless communication as part of communication subsystem 930 or as a separate component coupled to any portion of electronic device 900, such as a wireless charging receiver or a near-field communication receiver. In some embodiments, communication subsystem 930 may include circuits for wired communication technologies, such as Ethernet, coaxial communications, universal serial bus (USB), and the like. Communications subsystem 930 may permit data to be exchanged with a network, other computer systems, and/or any other devices. For example, communications subsystem 930 may be used to receive therapy determinations for therapeutic fluid (e.g., insulin) delivery, such as from a cloud computing system via an intermediary computing device (e.g., a controller) communicatively coupled to electronic device 900, where processor(s) 910 may, based on the therapy determinations, send commands to an actuator controller to cause the delivery of appropriate amounts of therapeutic fluid (e.g., insulin) to a user. In another example, communications subsystem 930 may be used to communicate measurement results (e.g., sensor glucose levels) to a computing device (e.g., a smartphone or a personal health monitoring device) and/or to a remote server via the computing device, or receive data (e.g., calibration data, configuration data, etc.) from the computing device or the remote server via the computing device.

Sensor(s) 950 may include, for example, a camera, an infrared sensor, an accelerometer, a pressure sensor, a temperature sensor, a proximity sensor, a magnetometer, a gyroscope, an inertial sensor (e.g., an inertial measurement unit (IMU)), an ambient light sensor, a position sensor, a depth sensor, a gesture detector, or any other similar module operable to provide sensory output and/or receive sensory input. In one example, one or more sensors of the electronic device 900 may be configured to measure a physiological parameter. For example, sensor(s) 950 may include an interstitial or blood glucose sensor.

Input/output user interface 960 may allow a user to send action requests to electronic device 900 to perform particular actions, and may provide information (e.g., status of electronic device 900, measurement results, alerts, etc.) to the user. Input/output user interface 960 may include one or more input devices, such as, for example, a touchscreen, a touch pad, microphone(s), button(s), dial(s), switch(es), a keyboard, a mouse, a game controller, or any other suitable device for receiving action requests and communicating the received action requests to processor(s) 910. In some embodiments, input/output user interface 960 may include one or more output devices, such as a display, a speaker, a light emitting device, a haptic device, and the like, to provide feedback to or alert the user.

In some embodiments, electronic device 900 may include a plurality of other hardware modules 970. Each of other hardware modules 970 may be a physical module within electronic device 900. While each of other hardware modules 970 may be permanently configured as a structure, some of other hardware modules 970 may be temporarily configured to perform specific functions or temporarily activated. Examples of other hardware modules 970 may include, for example, an audio output and/or input module (e.g., a microphone or speaker), a near field communication (NFC) module, a rechargeable battery, a battery management system, a wired/wireless battery charging system, an actuator controller, and the like. In some embodiments, one or more functions of other hardware modules 970 may be implemented in software.

In one example, electronic device 900 may be part of an insulin delivery device (e.g., a pump) that can deliver fast-acting insulin through a small tube configured for fluidic connection with a cannula inserted subcutaneously. Electronic device 900 may cause the delivery of two types of dosages-a basal dosage, which can be delivered periodically (e.g., every five minutes) in tiny amounts throughout the day and night, and a bolus dosage to cover an increase in blood glucose from meals and/or to correct high blood glucose levels. The insulin delivery device may include a user interface having button elements that can be manipulated to administer a bolus of insulin, to change therapy settings, to change user preferences, to select display features, and the like. The insulin delivery device may also include a display device that can be used to present various types of information or data to the user. In accordance with aspects of the present disclosure, a user of the insulin delivery device may use the button elements to input certain event data (e.g., event type, event start time, event details, etc.), and the user inputs can be confirmed using the display device.

In various implementations, the above-described hardware and modules may be implemented on a single device or on multiple devices that can communicate with one another using wired or wireless connections. In alternative configurations, different and/or additional components may be included in electronic device 900. Similarly, functionality of one or more of the components can be distributed among the components in a manner different from the manner described above.

The methods, systems, and devices discussed above are examples. Various embodiments may omit, substitute, or add various procedures or components as appropriate. For instance, in alternative configurations, the methods described may be performed in an order different from that described, and/or various stages may be added, omitted, and/or combined. Also, features described with respect to certain embodiments may be combined in various other embodiments. Different aspects and elements of the embodiments may be combined in a similar manner. Also, technology evolves and, thus, many of the elements are examples that do not limit the scope of the disclosure to those specific examples.

Specific details are given in the description to provide a thorough understanding of the embodiments. However, embodiments may be practiced without these specific details. For example, well-known circuits, processes, systems, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing various embodiments. Various changes may be made in the function and arrangement of elements without departing from the spirit and scope of the present disclosure.

Also, some embodiments were described as processes depicted as flow diagrams or block diagrams. Although each may describe the operations as a sequential process, many of the operations may be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

It will be apparent to those skilled in the art that substantial variations may be made in accordance with specific requirements. For example, customized or special-purpose hardware might also be used, and/or particular elements might be implemented in hardware, software (including portable software, such as applets, etc.), or both. Further, connection to other computing devices such as network input/output devices may be employed.

The embodiments disclosed herein are examples of the disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to like elements throughout the description of the figures.

Any of the herein described techniques, operations, methods, programs, algorithms, or codes may be converted to, or expressed in, a programming language or computer program embodied on a computer, processor, or machine-readable medium. The terms "programming language" and "computer program," as used herein, each include any language used to specify instructions to a computer or processor, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

It should be understood that the foregoing description is only illustrative of the present disclosure. To the extent consistent, any or all of the aspects detailed herein may be used in conjunction with any or all of the other aspects detailed herein. Various alternatives and modifications can be devised by those skilled in the art without departing from the disclosure. Accordingly, the present disclosure is intended to embrace all such alternatives, modifications, and variances. The embodiments described with reference to the attached drawing figures are presented only to demonstrate certain examples of the disclosure. Other elements, steps, methods, and techniques that are insubstantially different from those described above and/or in the appended claims are also intended to be within the scope of the disclosure. While several embodiments of the disclosure have been depicted in the drawings, it is not intended that the disclosure be limited thereto, as it is intended that the disclosure be as broad in scope as the art will allow and that the specification be read likewise. Therefore, the above description should not be construed as limiting, but merely as exemplifications of particular embodiments. Those skilled in the art will envision other modifications within the scope and spirit of the claims appended hereto. The aspects and features of the present disclosure and may be embodied in various forms. Thus, specific structural and functional details disclosed herein are not to be interpreted as limiting, but as a basis for the claims and as a representative basis for teaching one skilled in the art to variously employ the present disclosure in virtually any appropriately detailed structure.

With reference to the appended figures, components that can include memory can include non-transitory machine-readable media. The term "machine-readable medium," "processor-readable medium," or "computer-readable medium" may refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including, but not limited to, nonvolatile media, volatile media, and transmission media. Common forms of computer-readable media include, for example, magnetic and/or optical media such as compact disk (CD) or digital versatile disk (DVD), punch cards, paper tape, any other physical medium with patterns of holes, a RAM, a programmable read-only memory (PROM), an erasable programmable read-only memory (EPROM), a FLASH-EPROM, any other memory chip or cartridge, a carrier wave as described hereinafter, or any other medium from which a computer can read instructions and/or code. A computer program product may include code and/or machine-executable instructions that may represent a procedure, a function, a subprogram, a program, a routine, an application (App), a subroutine, a module, a software package, a class, or any combination of instructions, data structures, or program statements.

Those of skill in the art will appreciate that information and signals used to communicate the messages described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Terms, "and" and "or" as used herein, may include a variety of meanings that are also expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean A, B, C, or any combination of A, B, and/or C, such as AB, AC, BC, AA, ABC, AAB, AABBCCC, etc.

Further, while certain embodiments have been described using a particular combination of hardware and software, it should be recognized that other combinations of hardware and software are also possible. Certain embodiments may be implemented only in hardware, or only in software, or using combinations thereof. In one example, software may be implemented with a computer program product containing computer program code or instructions executable by one or more processors for performing any or all of the steps, operations, or processes described in this disclosure, where the computer program may be stored on a non-transitory computer readable medium. The various processes described herein can be implemented on the same processor or different processors in any combination.

Where devices, systems, components or modules are described as being configured to perform certain operations or functions, such configuration can be accomplished, for example, by designing electronic circuits to perform the operation, by programming programmable electronic circuits (such as microprocessors) to perform the operation such as by executing computer instructions or code, or processors or cores programmed to execute code or instructions stored on a non-transitory memory medium, or any combination thereof. Processes can communicate using a variety of techniques, including, but not limited to, conventional techniques for inter-process communications, and different pairs of processes may use different techniques, or the same pair of processes may use different techniques at different times.

In view of this description embodiments may include different combinations of features. Implementation examples are described in the following numbered clauses:
**Clause** 1. A system comprising: one or more processors in an electronic device; and one or more processor-readable storage media storing instructions which, when executed by the one or more processors, cause performance of: receiving a first certificate from a different electronic device, wherein the first certificate represents an identity of an authority that issued a device certificate of the different electronic device; determining that the first certificate is older than a second certificate representing an identity of an authority that issued a device certificate of the electronic device; transmitting an update message to the different electronic device in response to the determination that the first certificate is older, wherein the update message is digitally signed by a mutually trusted authority and includes the second certificate; and establishing a communication channel with the different electronic device based upon mutual authentication with the different electronic device using the second certificate.
**Clause 2.** The system of clause 1, wherein the first certificate comprises a first public key usable for verifying a digital signature of the device certificate of the different electronic device, and wherein the second certificate comprises a second public key usable for verifying a digital signature of the device certificate of the electronic device, the first public key being different from the second public key.
**Clause 3.** The system of clause 1 or 2, wherein the device certificate of the electronic device and the device certificate of the different electronic device were issued by different versions of the same authority.
**Clause 4.** The system of clause 3, wherein the mutually trusted authority corresponds to an older version of the authority.
**Clause 5.** The system of any of clauses 1-4, wherein when executed by the one or more processors, the instructions further cause performance of: validating, as part of the mutual authentication with the different electronic device, the device certificate of the different electronic device using the first certificate.
**Clause 6.** The system of any of clauses 1-5, wherein when executed by the one or more processors, the instructions further cause performance of: determining that the first certificate received from the different electronic device matches a stored copy of the first certificate, wherein use of the first certificate to validate the device certificate of the different electronic device is conditioned upon a successful match to the stored copy.
**Clause** 7. The system of any of clauses 1-6, wherein the update message is a PKCS#7 formatted message.
**Clause 8.** The system of any of clauses 1-7, wherein the communication channel is a secure communication channel that is encrypted and encrypted communication over the secure communication channel comprises one or more messages encrypted using a symmetric key, and wherein the symmetric key is a mutually agreed upon secret created as part of establishing the secure communication channel.
**Clause 9.** The system of any of clauses 1-8, wherein when executed by the one or more processors, the instructions further cause performance of: obtaining the second certificate through a network connection to the mutually trusted authority, wherein the transmitting of the update message to the different electronic device is performed during a time when the different electronic device or both the electronic device and the different electronic device have no network access to the mutually trusted authority.
**Clause 10.** The system of any of clauses 1-9, wherein the electronic device, the different electronic device, or both the electronic device and the different electronic device are medical devices.
**Clause 11.** A processor-implemented method comprising: receiving, by a first electronic device, a first certificate authority (CA) certificate from a second electronic device, wherein the first CA certificate represents an identity of a CA that issued a device certificate of the second electronic device; determining, by one or more processors of the first electronic device, that the first CA certificate is older than a second CA certificate representing an identity of a CA that issued a device certificate of the first electronic device; transmitting, by the first electronic device, an update message to the second electronic device in response to the determination that the first CA certificate is older, wherein the update message is digitally signed by a mutually trusted authority and includes the second CA certificate; and establishing, by the first electronic device, a secure communication channel for encrypted communication with the second electronic device based upon mutual authentication with the second electronic device using the second CA certificate.
**Clause 12.** The processor-implemented method of clause 11, wherein the first CA certificate comprises a first public key usable for verifying a digital signature of the device certificate of the second electronic device, and wherein the second CA certificate comprises a second public key usable for verifying a digital signature of the device certificate of the first electronic device, the first public key being different from the second public key.
**Clause 13.** The processor-implemented method of clauses 11 or 12, wherein the device certificate of the first electronic device and the device certificate of the second electronic device were issued by different versions of the same CA.
**Clause 14.** The processor-implemented method of clause 13, wherein the mutually trusted authority corresponds to an older version of the CA.
**Clause 15.** The processor-implemented method of any of clauses 11-14, further comprising: validating, as part of the mutual authentication with the second electronic device, the device certificate of the second electronic device using the first CA certificate.
**Clause 16.** The processor-implemented method of any of clauses 11-15, further comprising: determining that the first CA certificate received from the second electronic device matches a stored copy of the first CA certificate, wherein use of the first CA certificate to validate the device certificate of the second electronic device is conditioned upon a successful match to the stored copy.
**Clause** 17. The processor-implemented method of any of clauses 11-16, wherein the update message is a PKCS#7 formatted message.
**Clause 18.** The processor-implemented method of any of clauses 11-17, further comprising: obtaining the second CA certificate through a network connection to the mutually trusted authority, wherein the transmitting of the update message to the second electronic device is performed during a time when the second electronic device or both the first electronic device and the second electronic device have no network access to the mutually trusted authority.
**Clause 19.** One or more non-transitory processor-readable storage media storing instructions which, when executed by one or more processors of a first electronic device, cause performance of: receiving, by the first electronic device, a first certificate authority (CA) certificate from a second electronic device, wherein the first CA certificate represents an identity of a CA that issued a device certificate of the second electronic device; determining, by one or more processors of the first electronic device, that the first CA certificate is older than a second CA certificate representing an identity of a CA that issued a device certificate of the first electronic device; transmitting, by the first electronic device, an update message to the second electronic device in response to the determination that the first CA certificate is older, wherein the update message is digitally signed by a mutually trusted authority and includes the second CA certificate; and establishing, by the first electronic device, a secure communication channel for encrypted communication with the second electronic device including validating the device certificate of the first electronic device using the second CA certificate to mutually authenticate the first electronic device with the second electronic device.
**Clause 20.** The non-transitory processor-readable storage media of clause 19, wherein the first electronic device or the second electronic device is one of the following: an insulin delivery device; a glucose monitor device; or a computing device configured to communicate with the insulin delivery device or the glucose monitor device.

Further disclosed herein is the subject-matter of the following items:
1. A system comprising:
   one or more processors in an electronic device; and
   one or more processor-readable storage media storing instructions which, when executed by the one or more processors, cause performance of:
      receiving a first certificate from a different electronic device, wherein the first certificate represents an identity of an authority that issued a device certificate of the different electronic device;
      determining that the first certificate is older than a second certificate representing an identity of an authority that issued a device certificate of the electronic device;
      transmitting an update message to the different electronic device in response to the determination that the first certificate is older, wherein the update message is digitally signed by a mutually trusted authority and includes the second certificate; and
      establishing a communication channel with the different electronic device based upon mutual authentication with the different electronic device using the second certificate.
2. The system of item 1, wherein the first certificate comprises a first public key usable for verifying a digital signature of the device certificate of the different electronic device, and wherein the second certificate comprises a second public key usable for verifying a digital signature of the device certificate of the electronic device, the first public key being different from the second public key.
3. The system of item 1 or 2, wherein the device certificate of the electronic device and the device certificate of the different electronic device were issued by different versions of the same authority.
4. The system of item 3 or of one of items 1 to 3, wherein the mutually trusted authority corresponds to an older version of the authority.
5. The system of item 1 or of one of items 1 to 4, wherein when executed by the one or more processors, the instructions further cause performance of:
   validating, as part of the mutual authentication with the different electronic device, the device certificate of the different electronic device using the first certificate.
6. The system of item 5 or of one of items 1 to 5, wherein when executed by the one or more processors, the instructions further cause performance of:
   determining that the first certificate received from the different electronic device matches a stored copy of the first certificate, wherein use of the first certificate to validate the device certificate of the different electronic device is conditioned upon a successful match to the stored copy.
7. The system of item 1 or of one of items 1 to 6, wherein the update message is a PKCS#7 formatted message.
8. The system of item 1 or of one of items 1 to 7, wherein the communication channel is a secure communication channel that is encrypted and encrypted communication over the secure communication channel comprises one or more messages encrypted using a symmetric key, and wherein the symmetric key is a mutually agreed upon secret created as part of establishing the secure communication channel.
9. The system of item 1 or of one of items 1 to 8, wherein when executed by the one or more processors, the instructions further cause performance of:
   obtaining the second certificate through a network connection to the mutually trusted authority, wherein the transmitting of the update message to the different electronic device is performed during a time when the different electronic device or both the electronic device and the different electronic device have no network access to the mutually trusted authority.
10. The system of item 1 or of one of items 1 to 9, wherein the electronic device, the different electronic device, or both the electronic device and the different electronic device are medical devices.
11. A processor-implemented method comprising:
   receiving, by a first electronic device, a first certificate authority (CA) certificate from a second electronic device, wherein the first CA certificate represents an identity of a CA that issued a device certificate of the second electronic device;
   determining, by one or more processors of the first electronic device, that the first CA certificate is older than a second CA certificate representing an identity of a CA that issued a device certificate of the first electronic device;
   transmitting, by the first electronic device, an update message to the second electronic device in response to the determination that the first CA certificate is older, wherein the update message is digitally signed by a mutually trusted authority and includes the second CA certificate; and
   establishing, by the first electronic device, a secure communication channel for encrypted communication with the second electronic device based upon mutual authentication with the second electronic device using the second CA certificate.
12. The processor-implemented method of item 11, wherein the first CA certificate comprises a first public key usable for verifying a digital signature of the device certificate of the second electronic device, and wherein the second CA certificate comprises a second public key usable for verifying a digital signature of the device certificate of the first electronic device, the first public key being different from the second public key.
13. The processor-implemented method of item 11 or 12, wherein the device certificate of the first electronic device and the device certificate of the second electronic device were issued by different versions of the same CA.
14. The processor-implemented method of item 13 or of one of items 11 to 13, wherein the mutually trusted authority corresponds to an older version of the CA.
15. The processor-implemented method of item 11 or of one of items 11 to 14, further comprising:
   validating, as part of the mutual authentication with the second electronic device, the device certificate of the second electronic device using the first CA certificate.
16. The processor-implemented method of item 11 or of one of items 11 to 15, further comprising:
   determining that the first CA certificate received from the second electronic device matches a stored copy of the first CA certificate, wherein use of the first CA certificate to validate the device certificate of the second electronic device is conditioned upon a successful match to the stored copy.
17. The processor-implemented method of item 11 or of one of items 11 to 16, wherein the update message is a PKCS#7 formatted message.
18. The processor-implemented method of item 11 or of one of items 11 to 17, further comprising:
   obtaining the second CA certificate through a network connection to the mutually trusted authority, wherein the transmitting of the update message to the second electronic device is performed during a time when the second electronic device or both the first electronic device and the second electronic device have no network access to the mutually trusted authority.
19. One or more non-transitory processor-readable storage media storing instructions which, when executed by one or more processors of a first electronic device, cause performance of:
   receiving, by the first electronic device, a first certificate authority (CA) certificate from a second electronic device, wherein the first CA certificate represents an identity of a CA that issued a device certificate of the second electronic device;
   determining, by one or more processors of the first electronic device, that the first CA certificate is older than a second CA certificate representing an identity of a CA that issued a device certificate of the first electronic device;
   transmitting, by the first electronic device, an update message to the second electronic device in response to the determination that the first CA certificate is older, wherein the update message is digitally signed by a mutually trusted authority and includes the second CA certificate; and
   establishing, by the first electronic device, a secure communication channel for encrypted communication with the second electronic device including validating the device certificate of the first electronic device using the second CA certificate to mutually authenticate the first electronic device with the second electronic device.
20. The non-transitory processor-readable storage media of item 19, wherein the first electronic device or the second electronic device is one of the following:
   an insulin delivery device;
   a glucose monitor device; or
   a computing device configured to communicate with the insulin delivery device or the glucose monitor device.

## Claims

1. A system comprising:
one or more processors in an electronic device; and
one or more processor-readable storage media storing instructions which, when executed by the one or more processors, cause performance of:
receiving a first certificate from a different electronic device, wherein the first certificate represents an identity of an authority that issued a device certificate of the different electronic device;
determining that the first certificate is older than a second certificate representing an identity of an authority that issued a device certificate of the electronic device;
transmitting an update message to the different electronic device in response to the determination that the first certificate is older, wherein the update message is digitally signed by a mutually trusted authority and includes the second certificate; and
establishing a communication channel with the different electronic device based upon mutual authentication with the different electronic device using the second certificate.

2. The system of claim 1, wherein the first certificate comprises a first public key usable for verifying a digital signature of the device certificate of the different electronic device, and wherein the second certificate comprises a second public key usable for verifying a digital signature of the device certificate of the electronic device, the first public key being different from the second public key.

3. The system of claim 1 or 2, wherein the device certificate of the electronic device and the device certificate of the different electronic device were issued by different versions of the same authority.

4. The system of one of claims 1 to 3, wherein the mutually trusted authority corresponds to an older version of the authority.

5. The system of one of claims 1 to 4, wherein when executed by the one or more processors, the instructions further cause performance of:
validating, as part of the mutual authentication with the different electronic device, the device certificate of the different electronic device using the first certificate,
and/or
wherein when executed by the one or more processors, the instructions further cause performance of:
determining that the first certificate received from the different electronic device matches a stored copy of the first certificate, wherein use of the first certificate to validate the device certificate of the different electronic device is conditioned upon a successful match to the stored copy.

6. The system of one of claims 1 to 5, wherein the update message is a PKCS#7 formatted message,
and/or
wherein the electronic device, the different electronic device, or both the electronic device and the different electronic device are medical devices.

7. The system of one of claims 1 to 6, wherein the communication channel is a secure communication channel that is encrypted and encrypted communication over the secure communication channel comprises one or more messages encrypted using a symmetric key, and wherein the symmetric key is a mutually agreed upon secret created as part of establishing the secure communication channel.

8. The system of one of claims 1 to 7, wherein when executed by the one or more processors, the instructions further cause performance of:
obtaining the second certificate through a network connection to the mutually trusted authority, wherein the transmitting of the update message to the different electronic device is performed during a time when the different electronic device or both the electronic device and the different electronic device have no network access to the mutually trusted authority.

9. A processor-implemented method comprising:
receiving, by a first electronic device, a first certificate authority (CA) certificate from a second electronic device, wherein the first CA certificate represents an identity of a CA that issued a device certificate of the second electronic device;
determining, by one or more processors of the first electronic device, that the first CA certificate is older than a second CA certificate representing an identity of a CA that issued a device certificate of the first electronic device;
transmitting, by the first electronic device, an update message to the second electronic device in response to the determination that the first CA certificate is older, wherein the update message is digitally signed by a mutually trusted authority and includes the second CA certificate; and
establishing, by the first electronic device, a secure communication channel for encrypted communication with the second electronic device based upon mutual authentication with the second electronic device using the second CA certificate.

10. The processor-implemented method of claim 9, wherein the first CA certificate comprises a first public key usable for verifying a digital signature of the device certificate of the second electronic device, and wherein the second CA certificate comprises a second public key usable for verifying a digital signature of the device certificate of the first electronic device, the first public key being different from the second public key.

11. The processor-implemented method of claim 9 or 10, wherein the device certificate of the first electronic device and the device certificate of the second electronic device were issued by different versions of the same CA,
and/or
wherein the mutually trusted authority corresponds to an older version of the CA.

12. The processor-implemented method of one of claims 9 to 11, further comprising:
validating, as part of the mutual authentication with the second electronic device, the device certificate of the second electronic device using the first CA certificate,
and/or
further comprising:
determining that the first CA certificate received from the second electronic device matches a stored copy of the first CA certificate, wherein use of the first CA certificate to validate the device certificate of the second electronic device is conditioned upon a successful match to the stored copy.

13. The processor-implemented method of one of claims 9 to 12, wherein the update message is a PKCS#7 formatted message.

14. The processor-implemented method of one of claims 9 to 13, further comprising:
obtaining the second CA certificate through a network connection to the mutually trusted authority, wherein the transmitting of the update message to the second electronic device is performed during a time when the second electronic device or both the first electronic device and the second electronic device have no network access to the mutually trusted authority.

15. One or more non-transitory processor-readable storage media storing instructions which, when executed by one or more processors of a first electronic device, cause performance of:
receiving, by the first electronic device, a first certificate authority (CA) certificate from a second electronic device, wherein the first CA certificate represents an identity of a CA that issued a device certificate of the second electronic device;
determining, by one or more processors of the first electronic device, that the first CA certificate is older than a second CA certificate representing an identity of a CA that issued a device certificate of the first electronic device;
transmitting, by the first electronic device, an update message to the second electronic device in response to the determination that the first CA certificate is older, wherein the update message is digitally signed by a mutually trusted authority and includes the second CA certificate; and
establishing, by the first electronic device, a secure communication channel for encrypted communication with the second electronic device including validating the device certificate of the first electronic device using the second CA certificate to mutually authenticate the first electronic device with the second electronic device,
particularly wherein the first electronic device or the second electronic device is one of the following:
an insulin delivery device;
a glucose monitor device; or
a computing device configured to communicate with the insulin delivery device or the glucose monitor device.
